# EUROPÄISCHE PATENTSCHRIFT

(11) **EP 2 733 036 B1**
(45) Veröffentlichungstag und Bekanntmachung des Hinweises auf die Patenterteilung: **17.01.2024**
(21) Anmeldenummer: 13005274.9
(22) Anmeldetag: 08.11.2013
(51) Int. Cl.: B60W 30/02, B60W 30/04, B66F 17/00, B66F 9/065, B60W 10/04, B60W 10/184, B60W 10/20

(54) **Fahrbare Maschine mit Ladeanlage**
Mobile machine with loading system
Machine mobile comprenant une installation de chargement

(30) Priorität: 04.03.2013 DE 102013003511; 16.11.2012 DE 202012012524 U
(43) Veröffentlichungstag der Anmeldung: 21.05.2014
(73) Patentinhaber: Kramer-Werke GmbH, 88630 Pfullendorf (DE)
(72) Erfinder: Erlinger, Josef, 4174 St. Veit i. Mühlkreis (DE); Thumfart, Harald, 4175 Herzogshof (DE); Finzel, Robert, 4060 Leonding (DE)
(74) Vertreter: Otten, Roth, Dobler & Partner mbB Patentanwälte

(56) Entgegenhaltungen:
- EP-A1- 2 444 304
- EP-A2- 1 985 576
- CN-A- 101 786 454
- DE-A1- 10 010 011
- US-A1- 2005 102 083
- US-A1- 2009 057 065
- US-A1- 2012 039 696

## Beschreibung

Die Erfindung betrifft eine fahrbare Maschine nach dem Oberbegriff des Anspruchs 1.

Derartige Maschinen können im Betrieb in einen fahrdynamisch instabilen Betriebszustand gelangen, in dem ein Kippmoment entsteht, das die Maschine zum Umkippen bringen kann. Dies kann während der Fahrt beispielsweise durch den Betrieb der Ladeanlage oder durch Fahrmanöver erfolgen.

Zur Vermeidung von Instabilitäten bei stehender Maschine wurden im Stand der Technik bereits Maßnahmen ergriffen, die unter anderem auch Eingang in Industrienormen gefunden haben. So gibt es bereits bei handelsüblichen Teleskopladern Sicherheitseinrichtungen, bei denen die Ladeanlage blockiert wird, sobald ein instabiler Zustand droht.

Bei diesen Sicherungsmaßnahmen spielt der Einfluss der Fahrdynamik oder der Einfluss der Ladeanlage auf die Fahrdynamik auf die Stabilität jedoch keine Rolle. Instabile Betriebszustände können jedoch vielfach durch die Fahrdynamik während der Fahrt der Maschine auftreten. So spielen nicht nur Größen wie die aufgenommenen Last sowie der Status der Ladeanlage eine große Rolle hinsichtlich der Betriebsstabilität, sondern auch Größen wie die Geschwindigkeit, Kurvenradien und insbesondere Beschleunigungen oder Bremsmanöver.

Auch die geometrischen Verhältnisse des Untergrundes während der Fahrt können die Fahrdynamik und somit Maschinenstabilität beeinflussen, beispielsweise Bodenunebenheiten oder -neigungen sowie wechselnde Reibungskoeffizienten des Untergrunds, was insbesondere bei Fahrten im Gelände häufig auftritt.

In der Druckschrift WO 02/18262 A1 ist ein Gabelstapler bekannt geworden, der im Falle des seitlichen Umkippens ausfahrbare Stützen dazu nützt, um das vollständige Kippen zu verhindern und somit dem Fahrer eine größere Sicherheit zu gewährleisten.

Bei diesem Gegenstand ist zwar der Einfluss der Fahrdynamik im Hinblick auf die Instabilität hinsichtlich eines seitlichen Umkippens erkannt, der Nachteil dieser Instabilität bleibt jedoch auch bei diesem Gegenstand erhalten, da das Umkippen nicht verhindert würde.

Dokument DE 100 10 011 A1 beschreibt eine fahrbare Maschine mit einer Ladeanlage, einem Fahrantrieb und einem Fahrwerk gemäß dem Oberbegriff des Anspruchs 1.

Aufgabe der Erfindung ist es daher, eine Maschine der einleitend genannten Art vorzuschlagen, mittels der die Betriebssicherheit erhöht ist.

Diese Aufgabe wird ausgehend von einer Maschine nach dem Oberbegriff des Anspruchs 1 durch dessen kennzeichnende Merkmale gelöst.

Durch die in den Unteransprüchen genannten Maßnahmen sind vorteilhafte Ausführungen und Weiterbildungen der Erfindung möglich.

Dementsprechend zeichnet sich eine solche fahrbare Maschine dadurch aus, dass eine sensorische Erfassung der Bedienungsart eines Bedienelementes für die Maschine und eine Auswerteeinheit zur Erkennung einer Notsituation einer die Bedieneinheit betätigenden Bedienperson vorgesehen ist und dass eine Kontrolleinheit vorgesehen ist, die nach Erkennung der Notsituation zur selbsttätigen Auslösung eines dem Kippmoment, das die Gefahr des Umkippens der Maschine beinhaltet, entgegenwirkenden Drehmomentes oder zu einer vorbeugenden Maschinenreaktion zur Reduzierung eines solchen Kippmomentes während der Maschinenfahrt mittels wenigstens einem Aktor ausgebildet ist, um einen stabilen Betriebszustand zu erzielen. Als Maschinenreaktion nach Erkennung einer Notsituation sind somit selbsttätige Korrekturmaßnahmen und/oder vorbeugende Korrekturmaßnahmen vorgesehen.

Die Erfindung hat somit zum Gegenstand, in einer besonderen Situation, nämlich der Notsituation einer die Bedieneinheit betätigenden Bedienperson, als Maschinenreaktion eine Korrekturmaßnahme vorzusehen. Somit ist es möglich, bei einer auftretenden oder drohenden Instabilität in Verbindung mit einer Notsituation die Maschine und insbesondere deren Fahrdynamik durch Korrekturmaßnahmen zu stabilisieren.

Eine solche Maschine berücksichtigt somit erstmalig die Beeinflussung der Fahrdynamik auf die Maschinenstabilität, indem sie durch eine Maschinenreaktion auf die Fahrdynamik einwirkt, um die Gefahr der Instabilität und insbesondere die Gefahr des Umkippens der Maschine zu vermeiden bzw. zu reduzieren.

Die bisherigen bekannten Sicherungsvorrichtungen bezogen sich lediglich auf den Betrieb der Ladeanlage und waren insbesondere nicht in der Lage, während der Fahrt die nunmehr erfindungsgemäß gegebene Sicherheit zu gewährleisten.

Der Stand der Technik, der bei Staplern vorgeschlagen wurde, um seitliche Stützen im Falle des Umkippens auszufahren, nimmt dagegen das Umkippen im Falle einer Instabilität in Kauf, da er nicht mit Maschinenreaktionen arbeitet, die auf die Fahrdynamik einwirken.

Durch die erfindungsgemäße Maschine ist nunmehr erstmalig eine Sicherungseinrichtung vorgesehen, die während der Fahrt unter Berücksichtigung der Fahrdynamik arbeitet. Dabei kann Kippmomenten sowohl in Längsrichtung als auch in Quer-, das heißt in seitlicher Richtung der Maschine vor, während oder nach deren Auftreten entgegengewirkt werden.

Vorteilhafterweise wird die Notsituation durch Erfassung einer Betätigungsgeschwindigkeit an einem Bedienelement zur Betätigung der Maschine und/oder die Erfassung der Krafteinwirkung auf ein Bedienelement zur Betätigung der Maschine vorgesehen.

So wird aufgrund der vorhandenen Notsituation die Betätigung an einem oder mehreren Bedienelementen mit entsprechender Geschwindigkeit oder Krafteinwirkung erfindungsgemäß erfasst und zum Auslösen der Maschinenreaktion verwendet.

### Zur Erfassung der Krafteinwirkung oder der

Betätigungsgeschwindigkeit an dem Bedienelement wird bevorzugt ein Geschwindigkeitssensor und/oder ein Positionssensor und/oder ein Beschleunigungssensor und/oder ein Kraftsensor an dem oder den Bedienelementen zur Betätigung der Maschine vorgesehen. Mit Hilfe derartiger Sensoren ist die Betätigungsgeschwindigkeit und/oder die Krafteinwirkung auf ein Bedienelement erfassbar.

In einer alternativen Ausführungsform oder als Ergänzung zu den genannten Sensoren kann auch die Erfassung einer Auslöseposition und/oder einer Auslösekrafteinwirkung an einem Bedienelement zur Betätigung der Maschine vorgesehen werden. So kann beispielsweise eine Auslösekraft durch Überwindung eines Widerstandes oder einer Gegenkraft erforderlich sein, um in eine Auslöseposition des Bedienelementes zu gelangen. Dies wäre eine Ausgestaltung, um sicherzustellen, dass die Auslöseposition nur in einer Notsituation erreicht wird. Auch die Tatsache, dass eine Auslösekraft oberhalb der üblichen Krafteinwirkung auf das Bedienelement einwirkt, kann zum Auslösen der Maschinenreaktion verwendet werden. Hierzu ist beispielsweise ein Kraftsensor, wie zuvor beschrieben, verwendbar, wobei bei Übersteigen eines Schwellwertes die Auslösekraft erreicht und somit die Maschinenreaktion ausgelöst wird.

In einer weiteren alternativen Ausführungsform oder ergänzend zu den oben genannten Maßnahmen zur Erkennung einer Notsituation können auch Sensoren an Maschinenkomponenten vorgesehen werden, die anhand der Betätigung eines Bedienelementes zur Betätigung der Maschine eine sensierbare Zustandsänderung erfahren. Die Charakteristik einer solchen Zustandsänderung kann wiederum Rückschlüsse auf die Bedienart und somit auf eine Notsituation zulassen.

So ist beispielsweise denkbar, dass eine für den Normalbetrieb atypische Betätigung eines Bedienelementes sowie der Folgereaktionen an einer oder mehreren Maschinenkomponenten einer Notsituation zugeordnet wird und daraufhin die Maschinenreaktion ausgelöst wird.

Die Erfassung wenigstens einer stabilitätsrelevanten Zustandsgröße an einer Maschinenkomponente und/oder von Maschinenreaktionen auf die Bedienart kann somit Rückschlüsse auf eine Notsituation zulassen. Hierzu wird bevorzugt ein Beschleunigungssensor und/oder ein Neigungssensor und/oder ein Ortungssensor und/oder ein Lastsensor und/oder ein Drucksensor und/oder eine Kombination aus zwei oder mehreren solcher Sensoren an wenigstens einer Maschinenkomponente vorgesehen, deren Zustandsänderung oder Reaktion auf Betätigung eines Bedienelementes Rückschlüsse auf eine Notsituation zulässt.

In einer entsprechenden Auswerteeinheit wird in dieser Ausführungsform durch eine Auswertung der sensorisch erfassten Maschinenreaktion ein Rückschluss auf die Bedienart des Bedienelementes vorgenommen und somit die Notsituation erkannt.

In einer vorteilhaften Ausführungsform der Erfindung wird eine seitliche Neigungsverstellung oder eine seitliche Verschiebebewegung der Maschine oder einer Maschinenkomponente als Maschinenreaktion vorgesehen, die einem drohenden seitlichen Umkippen der Maschine entgegengerichtet ist. Erfindungsgemäß, ist eine seitliche Neigungsverstellung der Ladeanlage, und/oder eine seitliche Neigungsverstellung der Lastaufnahme der Ladeanlage vorgesehen.

Eine solche Neigungsverstellung oder Verschiebebewegung kann zu einer stabileren Fahrdynamik der Maschine führen, beispielsweise wenn diese sich in eine Kurve neigt. Auch bei Fahren in unebenem Gelände kann eine Neigungsverstellung der Maschine einem drohenden Umkippen entgegenwirken.

Eine erfindungsgemäße Maschinenreaktion kann beispielweise in der Ladeanlage, dem Fahrantrieb und/oder dem Fahrwerk vorgesehen werden. So kann durch Bewegungen im Bereich der Ladeanlage eine Gegenreaktion oder eine vorbeugende Maßnahme getroffen werden. Der Fahrantrieb kann durch entsprechende Eingriffe während der Fahrt ebenfalls dazu verwendet werden, um ein drohendes Kippmoment zu reduzieren oder zu vermeiden oder um einem bereits aufgetretenen Kippmoment in einer entsprechenden Reaktion entgegenzuwirken.

Ebenso kann hierzu das Fahrwerk verwendet werden, beispielsweise indem eine Spurverstellung oder eine Neigungsverstellung vorgesehen wird.

So wird in einer besonderen Ausführungsform der Erfindung eine Neigungsverstellung zwischen dem Fahrwerk und einem Maschinenrahmen vorgesehen. Durch diese Anordnung der Neigungsverstellung kann das Fahrwerk in Bodenkontakt verbleiben, während der Maschinenrahmen mit den daran aufgebauten Maschinenkomponenten eine Neigung einnehmen kann, die einem drohenden oder einen bereits vorhandenen Kippmoment entgegenwirkt.

Auch eine Verstellung der Ladeanlage während der Fahrt kann zur Stabilisierung der Maschine vorgesehen werden. Insbesondere kann hierzu auch neben den bereits ohnehin vorhandenen Verstellmöglichkeiten der Ladeanlage eine Neigungsverstellung im Bereich der Ladeanlage vorgesehen werden. Auch hierdurch kann einem drohenden oder bereits aufgetretenen Kippmoment entgegengewirkt werden.

Um eine dynamische Stabilität in Längsrichtung der Maschine zu verbessern, kann beispielsweise als Maschinenreaktion auch ein aktives nach vorn oder hinten Neigen der Ladeanlage verwendet werden, was insbesondere beim Bremsen oder Beschleunigen des Fahrzeugs von Vorteil ist.

Eine Neigungsverstellung kann beispielsweise auch im Bereich der Lastaufnahme der Ladeanlage vorgesehen werden, um eine aufgenommene Last zur Stabilisierung der Maschine zu verwenden. Da im Bereich der Ladeanlage in der Regel ohnehin bereits vielfältige Anschlussmöglichkeiten vorhanden sind, um Arbeitsgeräte oder dergleichen beispielsweise hydraulisch zu betreiben, kann in diesem Bereich auch eine Neigungsverstellung ohne größeren Zusatzaufwand realisiert werden.

Eine erfindungsgemäße Maßnahme gegen ein drohendes Umkippen der Maschinen kann in einer Verschiebung von Maschinenkomponenten und/oder der von der Ladeanlage geladenen Last bestehen. Auch durch derartige Maßnahmen kann einem Kippmoment vorgebeugt oder entgegengewirkt werden.

Eine Neigungsverstellung der Maschine oder einer Maschinenkomponente wie o. a. kann unterschiedlich realisiert werden. Sie kann bei durchgehenden Achsen beispielsweise über eine Achsverschränkung bewirkt werden. Im Falle einer Pendelachse sind beispielsweise bei handelsüblichen Maschinen Sperrzylinder in Gebrauch, um die Pendelachse unter bestimmten Voraussetzungen zu sperren. Durch das Sperren der Pendelachse wird die Stabilitätszone, innerhalb der sich der Maschinenschwerpunkt befinden muss, vergrößert. Im normalen Fahrbetrieb wird diese Sperre freigegeben, sodass ein Niveauausgleich zwischen den beiden Laufrädern der Pendelachse stattfinden kann. Hierdurch werden die Fahreigenschaften, insbesondere bei Geländefahrt verbessert, da hierdurch ein Bodenkontakt beider Laufräder gewährleistet wird.

Eine aktive Neigungsverstellung der Maschine ist bei diesen bekannten Gegenständen jedoch nicht vorgesehen, könnte jedoch beispielsweise durch Druckbeaufschlagung eines solchen Sperrzylinders ohne größeren Zusatzaufwand realisiert werden. Grundsätzlich kann eine Neigungsverstellung jedoch auch anderweitig, beispielsweise durch separate Hubzylinder oder dergleichen realisiert werden. Somit kann eine Neigungsverstellung auch bei Maschinen vorgesehen werden, die ein anderweitiges Fahrwerk, beispielsweise eine Einzelradaufhängung aufweisen.

Neben den genannten Neigungsverstellungen und/oder
- verschiebungen können erfindungsgemäße Maßnahmen wie bereits oben angedeutet auch im Bereich des Fahrantriebs bzw. des Fahrwerks vorgesehen werden. So können beispielsweise Lenkaktionen verwendet werden, um das drohende Umkippen der fahrbaren Maschine abzufangen. Auch Beschleunigungs- oder Bremsaktionen können dazu verwendet werden, um die Fahrstabilität im erfindungsgemäßen Sinne zu sichern.

Diese jeweiligen Lenk-, Beschleunigungs- oder Bremsaktionen können durch selbsttätige Betätigung der ohnehin für den Bediener vorgesehenen Lenk-, Antriebs- oder Bremsaktionen vorgenommen werden.

Es können jedoch zusätzlich auch Eingriffe vorgesehen werden, die einem Bediener im Normalbetrieb nicht zur Verfügung stehen. So können unterschiedliche Beschleunigungs- und/oder Bremsaktionen an wenigstens zwei verschiedenen Laufrädern selbsttätig vorgesehen werden. Ebenso können derartige Eingriffe auch an Antriebsraupen vorgesehen werden, sofern anstelle von Laufrädern ein Raupenantrieb verwendet wird. Erfindungsgemäß, sind unterschiedliche selbsttätige Lenkaktionen an wenigstens zwei Laufrädern und/oder Antriebsraupen vorgesehen.

Auch für Bewegungen der Ladeanlage können Beschleunigungen oder Bremsaktionen der Ladeanlage oder von Komponenten der Ladeanlage vorgesehen werden, um die Fahrstabilität der Maschine sicherzustellen. Hierzu können die bereits ohnehin vorhandenen Verstellmöglichkeiten, beispielsweise ein Hubzylinder oder ein Teleskopantrieb oder dergleichen verwendet werden. Es können jedoch für den erfindungsgemäßen Zweck auch zusätzliche Funktionen, beispielsweise Schwenkbewegungen oder dergleichen vorgesehen werden.

Alle Maßnahmen, die zur erfindungsgemäßen Stabilisierung der Maschine während der Fahrt geeignet sind, insbesondere die zuvor beschriebenen Maßnahmen können auch untereinander in Kombination vorgesehen werden. Dabei können die Maßnahmen zwar gleichzeitig, aber ansonsten unabhängig voneinander oder aber auch funktional gekoppelt eingesetzt werden. Eine Kopplung wäre beispielsweise der Fall, wenn eine Veränderung eine Größe als Funktion einer anderen Größe stattfindet, zum Beispiel wenn eine geschwindigkeitsabhängige oder beschleunigungsabhängige Lenkreaktion zusammen mit einer Beschleunigungs- oder Bremsreaktion vorgenommen wird, wobei die Größe des Lenkradius und/oder der Beschleunigung abhängig von den jeweiligen anderen Werten beeinflusst wird.

Neben den beschriebenen nach Auslösung selbsttätig einsetzenden Maschinenreaktionen sind jedoch erfindungsgemäß auch vorbeugende Maßnahmen denkbar, die einem drohenden Kippmoment bereits vor dessen Auftreten entgegen wirken. So kann beispielsweise präventiv auf die möglichen Betriebsbedingungen Einfluss genommen werden, die über die Bedienung durch die Bedienperson erreichbar sind.

Beispielsweise kann abhängig von einer Geschwindigkeit und/oder einer Beschleunigung und/oder einer Lenkeinstellung und/oder von dem Zustand der Ladeanlage die Ansteuerbarkeit einer oder mehrerer dieser Parameter beeinflusst werden. Es kann beispielsweise bei einer gewissen Geschwindigkeit oder Beschleunigung nur ein bestimmter Bereich von Lenkradien zugelassen werden. Auch der zulässige Zeitablauf von Lenkbewegungen kann so verändert werden.

Ebenso können beispielsweise abhängig von einer Lenkbewegung nur ein bestimmter Geschwindigkeitsbereich oder ein bestimmter Beschleunigungsverlauf zugelassen werden. Auch der Verlauf von Bremsmanövern kann entsprechend beeinflusst werden. Die präventiven Eingriffe können beispielsweise auch abhängig von Bremsbetätigungen bei der Lenkung und/oder der Geschwindigkeit und/oder der Verstellung und/oder der Last der Ladeanlage vorgesehen werden.

Erfindungsgemäß sind somit präventive Maßnahmen als Maschinenreaktion während der Fahrt im Hinblick auf die mögliche bedienerseitige Betätigung der Maschine ebenso einsetzbar, wie aktive selbsttätige Maschineneingriffe zur Stabilisierung der Maschine.

Grundsätzlich sind alle Maßnahmen erfindungsgemäß einsetzbar, die dafür Sorge tragen, dass sich die Schwerpunktslage der Maschine innerhalb der in der jeweiligen Betriebssituation vorliegenden Stabilitätszone der Maschine befindet.

Durch die erfindungsgemäße Verbesserung der Stabilität der Maschine während der Fahrt ist eine solche Maschine nicht nur sicherer, sondern auch wirtschaftlicher zu betreiben, da beispielsweise die Umschlagzeiten der bewegten Güter verkürzt werden können.

Zur Erfassung der Instabilität sind vielfältige Sensoren denkbar. So kann beispielsweise eine Druckdifferenz in einem Neigezylinder oder eine Druckdifferenz in Radnaben durch entsprechende Drucksensoren oder sonstigen Neigungssensoren erfasst werden.

Eine Möglichkeit zur Sensorik eines Kippmomentes ist beispielsweise auch durch eine Luftdruckmessung in den Laufrädern gemessen. Auch Biegesensoren an verschiedenen Maschinenkomponenten sind beispielsweise verwendbar.

Darüber hinaus können auch Beschleunigungssensoren, vorzugsweise im Bereich der Schwerpunktslage vorgesehen werden.

Hilfreich ist auch die Messung der Lastverteilung, beispielsweise durch Wägezellen in unterschiedlichen Maschinenkomponenten, beispielsweise in den Radköpfen. Dies ergibt auch die Möglichkeit, die Schwerpunktslage zu bestimmen.

Eine weitere Möglichkeit der sensorischen Datenerfassung besteht darin, den Zustand von Bedienorganen zu erfassen, die von der Bedienperson betätigt werden. Dabei kommen sowohl Bedienorgane in Betracht, die zur Erkennung einer Notsituation überwacht werden, als auch alle sonstigen Bedienorgane. Auch der zeitliche Verlauf der Betätigung insbesondere vor Eintritt der Notsituation kann zur sensorischen Datenerfassung herangezogen und gegebenenfalls gespeichert werden. So können beispielsweise über die Bedienung eines Gaspedals oder eines Lenkrads mittels entsprechender Sensoren an den Bedienorganen Daten gewonnen werden, die einen Rückschluss auf Geschwindigkeiten, Beschleunigungen, Lenkradien, Lenkverläufe und dergleichen erlauben.

Weiterhin können zur Erfassung der Instabilität auch Daten (-) genutzt werden, bei denen die Umgebung der Maschine, (beispielsweise eine Umgebungskarte), Berücksichtigung findet. Insbesondere vorbeugende Maßnahmen sind sowohl gespeicherte Daten als auch sensorisch erfasste Daten verwendbar. Insbesondere kann auch ein Fahrbahnsensor zur Erfassung der Fahrbahnqualität, beispielsweise hinsichtlich der Oberflächenbeschaffenheit, der Kontur, der möglichen Friktion, oder dergleichen verwendbar. Parameter über die Umgebung der Maschine bzw. eine Geländeüberwachung können beispielsweise über Kameras, Ortungssysteme (GPS, Lasersensoren, Radarsensoren, usw.) vorgesehen werden, um die Fahrbahn bzw. Fahrweg zu analysieren und mögliche Stellgrößen zu erfassen.

Die Intensität, mittels der Korrekturmaßnahmen zur Herstellung der Maschinenstabilität vorgenommen werden, kann ebenfalls abhängig von gemessenen Werten, beispielsweise von einer Geschwindigkeit, einer Beschleunigung oder einer Druckdifferenz zur Erfassung eines drohenden Kippmoments vorgenommen werden.

Ein Ausführungsbeispiel der Erfindung ist in der Zeichnung dargestellt und wird anhand der Figuren nachfolgend näher erläutert.

Im Einzelnen zeigen:
- Figur 1: eine Seitenansicht eines erfindungsgemäßen Teleskopladers mit Ladeanlage in Ausgangsstellung,
- Figur 2: eine Seitenansicht eines Teleskopladers gemäß Figur 1 mit teilweise angehobener Ladeanlage,
- Figur 3: eine Seitenansicht eines Teleskopladers gemäß Figur 2 mit teilweise ausgefahrener Ladeanlage,
- Figur 4: eine Draufsicht eines Teleskopladers mit ausgefahrener und angehobener Ladeanlage in erfindungsgemäß geneigter Stellung,
- Figur 5: trägt eine Rückansicht des Teleskopladers gemäß Figur 4,
- Figur 6: zeigt eine Draufsicht des Teleskopladers gemäß Figur 4 mit verändertem Lenkeinschlag und veränderter Neigung,
- Figur 7: zeigt eine Rückansicht des Teleskopladers gemäß Figur 6 und
- Figur 8: zeigt eine Figur 6 entsprechende Darstellung mit angedeuteter Lenkbewegung als zusätzliche Maschinenreaktion.

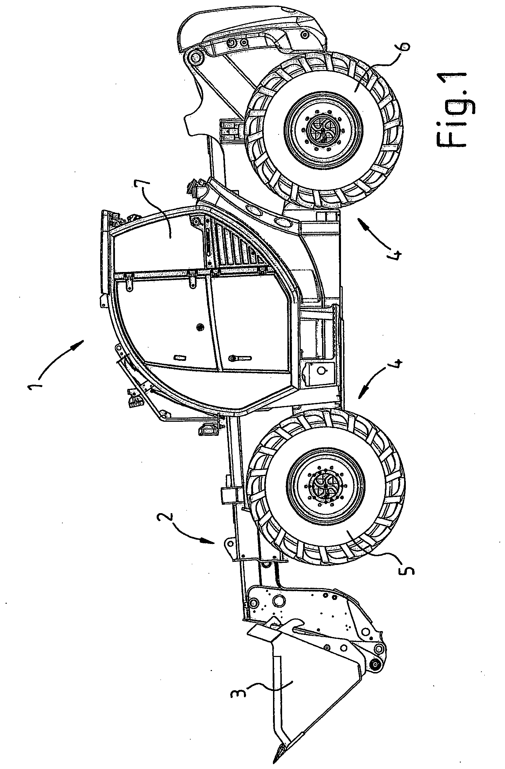

Der Teleskoplader gemäß Figur 1 umfasst in üblicher Weise eine Ladeanlage 2 mit einer Schaufel 3 als Lastaufnahme. Weiterhin verfügt der Teleskoplader 1 über ein Fahrwerk 4 mit Laufrädern 5, 6 sowie eine Fahrerkabine 7 für den Maschinenbediener.

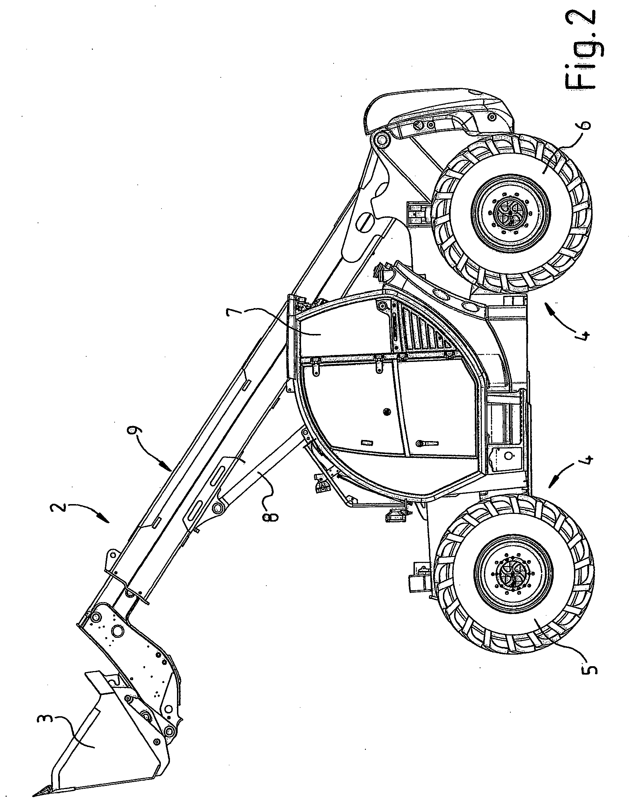

Figur 2 zeigt den Teleskoplader gemäß Figur 1 mit teilweise angehobener Ladeanlage 2. Der Teleskoparm 9 ist mittels eines Hubzylinders 8 in eine Mittelposition angehoben, jedoch noch in eingefahrenem Zustand.

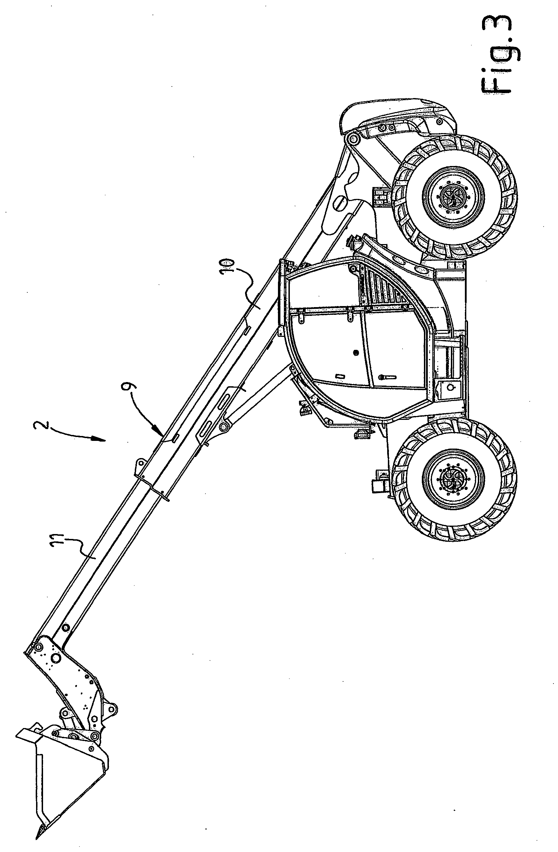

In Figur 3 ist der Teleskoplader gemäß Figur 2 wiederum in einer angehobenen Mittelposition der Ladeanlage 2 dargestellt, wobei der Hubarm 9 nunmehr teilweise ausgefahren ist. Der Hubarm 9 ist durch Verschiebung der Teleskopsegmente 10, 11 in der Länge teleskopierbar.

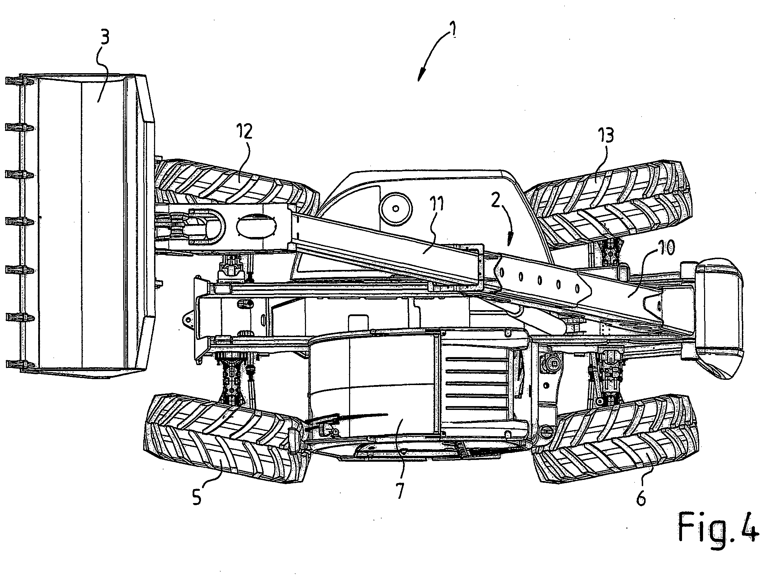

Figur 4 zeigt einen Teleskoplader gemäß den vorangegangenen Figuren in der Draufsicht, wobei die Ladeanlage 2 in der maximalen Hubhöhe und voll ausgefahren ist. In Figur 4 ist erkennbar, dass die Laufräder 5, 6, 12, 13 jeweils einen Lenkeinschlag aufweisen. Aus dieser Figur geht unmittelbar hervor, dass der Teleskoplader 1 eine Allradlenkung aufweist. Solche Teleskoplader mit Allradlenkung sind insbesondere auch in Verbindung mit einem hydrostatischen Allradantrieb bereits handelsüblich. Hierdurch ergeben sich in bekannter Weise vielfältige Vorteile hinsichtlich des Lenkradius bzw. des Lenkverhaltens bzw. des Fahrverhaltens allgemein.

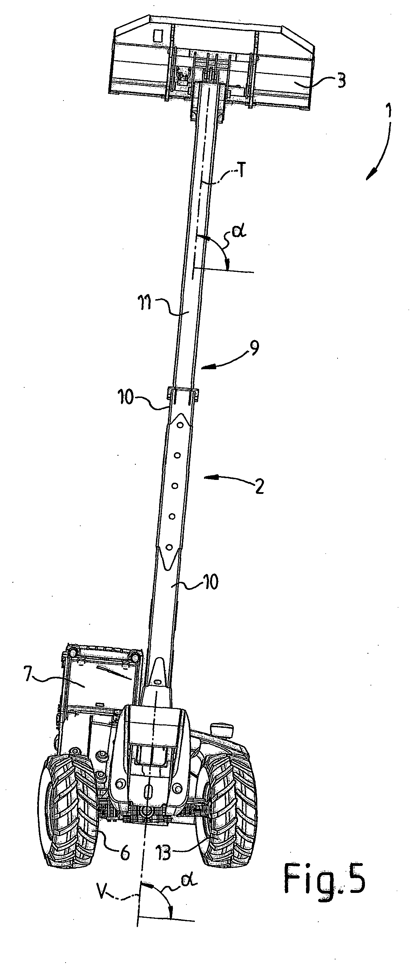

In Figur 5 ist der Teleskoplader gemäß Figur 4 zu sehen, wobei hier deutlich wird, dass der Teleskoplader korrespondierend zum Lenkeinschlag (vgl. Figur 4) eine geneigte Position zeigt. Dies ist beispielsweise anhand der Achse T des Teleskoparms 9 erkennbar. Diese Teleskopachse weist einen Winkel α gegenüber der Horizontalen bzw. einen Neigungswinkel von 90°- α gegenüber der Vertikalen auf. Die Ausführung gemäß Figur 5 erzielt diese Neigung dadurch, dass der gesamte Maschinenaufbau gegenüber dem Fahrwerk entsprechend geneigt ist. Dies wird in Figur 5 auch dadurch veranschaulicht, dass die in Flucht zur Teleskopachse T liegende Vertikalachse V des Maschinenaufbaus den gleichen Winkel α gegenüber der Horizontalen aufweist, während die Laufräder 6, 13 auf einer in Figur 5 angenommenen horizontalen Fläche stehen. Diese Neigungsverstellung kann durch einen oder mehrere Hubzylinder hydraulisch bewerkstelligt werden. Falls eine oder beide Achsen als Pendelachsen ausgeführt sind, können ein oder mehrere solcher Zylinder zwischen der jeweiligen Achse und dem Fahrzeugrahmen wirken.

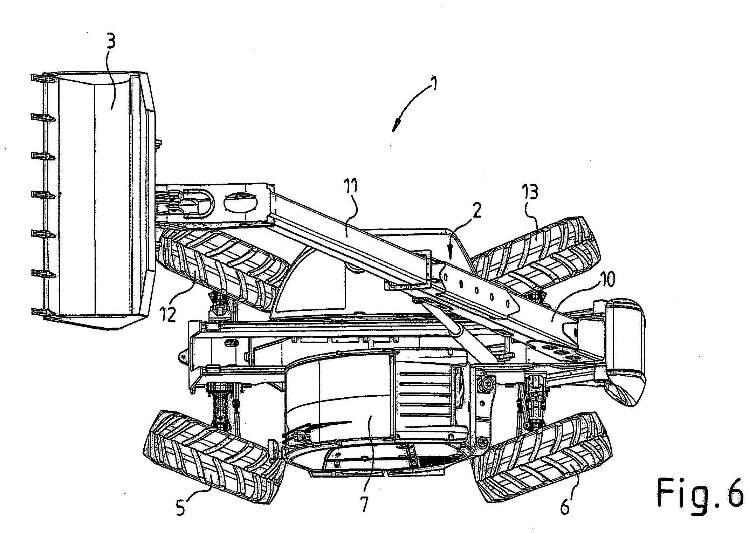

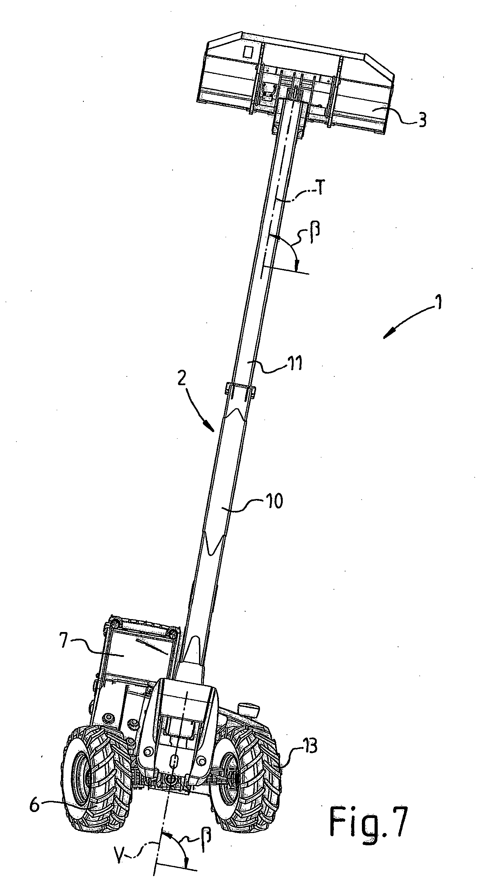

Die Figuren 6 und 7 entsprechen den Figuren 4 und 5, wobei nunmehr ein größerer Lenkeinschlag der Laufräder 5, 6 bzw. 12, 13 eingenommen ist. Zur Stabilisierung der zugehörigen Fahrdynamik wird dementsprechend auch der Neigungswinkel vergrößert, wie in Figur 7 anhand der Teleskopachse T bzw. der Vertikallängsachse V ersichtlich ist. Der Winkel β gegenüber der Horizontalen ist in dieser Stellung deutlich verkleinert, das heißt, der entsprechende Neigungswinkel 90°- β gegenüber der Vertikalen ist entsprechend vergrößert. Wie anhand der Figuren 4 bis 7 erkennbar ist, ist bei dieser Ausführungsform die Neigung des Maschinenaufbaus abhängig vom Lenkeinschlag der Laufräder 5, 6 bzw. 12, 13.

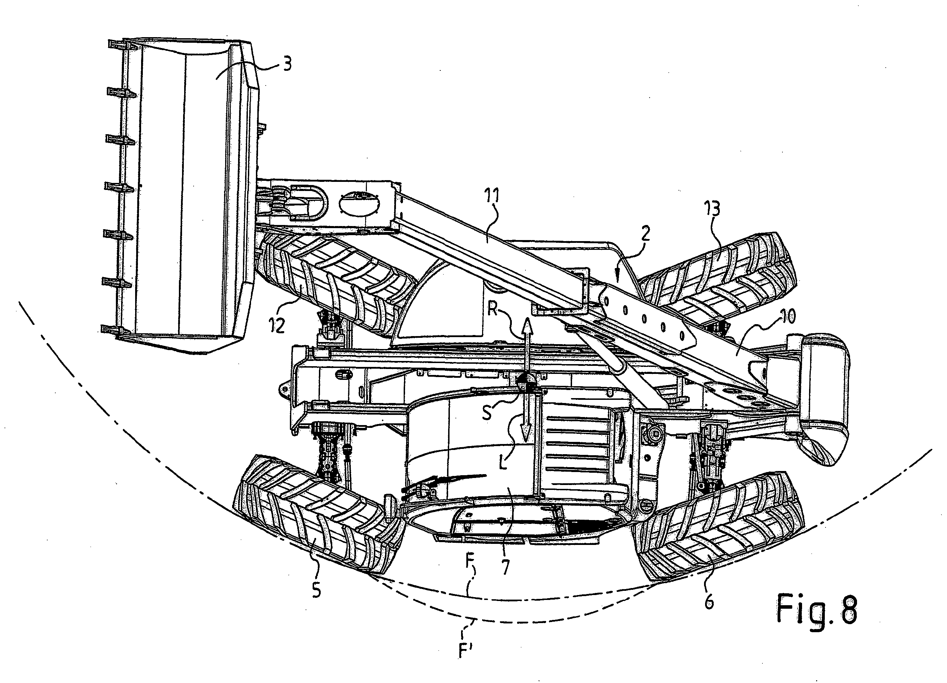

In Figur 8 ist ein Fahrweg F eingezeichnet, der die normale Kurvenfahrt des dargestellten Teleskopladers andeutet. Mit einer Strichlinie ist eine Ausgleichsbewegung des Teleskopladers in Form einer Lenkreaktion dargestellt, wie sie bei einem auftretenden Kippmoment nach rechts als Gegenreaktion denkbar wäre. Der Schwerpunkt S befindet sich im Mittelpunkt des als Schwerpunktsymbol verwendeten, mit zwei schraffierten Quadranten versehenen Kreises. Zwei Pfeile A und I sollen andeuten, welche Kräfte bzw. Momente während der Kurvenfahrt wirken. Die Fliehkraft aufgrund der Kurvenfahrt wirkt in Richtung A nach außen. Die als Korrektur durchgeführte Lenkbewegung bewirkt eine Gegenkraft in Richtung des Pfeils I nach Innen. Eine solche Lenkbewegung kann als Gegenreaktion beispielsweise in Verbindung mit der ebenfalls in Figur 8 erkennbaren Innenneigung oder einer anderen erfindungsgemäßen Maschinenreaktion des Teleskopladers zur Stabilisierung der Fahrdynamik vorgesehen werden.

Wie vorstehend bereits beschrieben ist, kann die erfindungsgemäße Sicherheitseinrichtung von zusätzlichen Größen abhängig ausgestaltet werden. Neben der Lenkung bzw. dem Lenkeinschlag, Beschleunigungen oder Geschwindigkeiten bzw. Bremsvorgängen können hierbei auch die eingenommene Höhe der Ladeanlage, die Länge der Ladeanlage für sich alleine oder in Kombination und insbesondere auch in Abhängigkeit voneinander dazu herangezogen werden, um eine stabile Maschinenposition im Fahrbetrieb zu bewirken.

Ein beispielhafter Prozess, wie eine Maschinenreaktion abhängig von verschiedenen Parametern gesteuert werden kann, könnte wie folgt ablaufen. In der Ausgangsposition werden Schwerpunktlage, Geschwindigkeit, der Lenkungswinkel sowie die Beschleunigung sensorisch erfasst.

Die Schwerpunktslage wird hinsichtlich einer Schwerpunktsauslenkung analysiert. Ergibt sich hieraus ein kritischer Bereich, so wird eine sich daraus möglicherweise ergebende Neigung berechnet, die als Gegenreaktion erforderlich ist. Diese Neigung wird entsprechend eingestellt. Aus der Erfassung der Geschwindigkeit, dem Lenkungswinkel sowie der Beschleunigung wird gleichzeitig berechnet, ob eine Rücklenkung als Lenkeingriff notwendig ist. Sofern die Berechnung der Rücklenkung eine notwendige Rücklenkung ergibt, wird diese aktiv vorgenommen.

Nach erfolgter Neigungsverstellung und/oder Rücklenkung wird erneut berechnet, ob die ausgleichenden Kräfte bzw. Momente ausgeglichen sind. Führt diese Prüfung zu einem positiven Ergebnis, beginnt das Verfahren von vorn. Erfolgt ein negatives Ergebnis, wird eine erneute Berechnung der erforderlichen Rücklenkung sowie der erforderlichen Neigung unmittelbar durchgeführt.

Wie vorstehend bereits beschrieben ist, kann die erfindungsgemäße Sicherheitseinrichtung von zusätzlichen Größen abhängig ausgestaltet werden. Neben der Lenkung bzw. dem Lenkeinschlag, Beschleunigungen oder Geschwindigkeiten bzw. Bremsvorgängen können hierbei auch die eingenommene Höhe der Ladeanlage, die Länge der Ladeanlage für sich alleine oder in Kombination und insbesondere auch in Abhängigkeit voneinander dazu herangezogen werden, um eine stabile Maschinenposition im Fahrbetrieb zu bewirken.

### Bezugszeichenliste:

- 1: Teleskoplader
- 2: Ladeanlage
- 3: Schaufel
- 4: Fahrwerk
- 5: Laufrad
- 6: Laufrad
- 7: Fahrerkabine
- 8: Hubzylinder
- 9: Teleskoparm
- 10: Teleskopsegment
- 11: Teleskopsegment
- 12: Laufrad
- 13: Laufrad
- T: Teleskopachse
- V: Vertikalachse

## Patentansprüche

1. Fahrbare Maschine mit einer Ladeanlage, einem Fahrantrieb und einem Fahrwerk, wie ein Radlader, ein Teleskoplader oder dergleichen, wobei ein oder mehrere Sensoren zur Erkennung eines instabilen Betriebszustandes oder eines drohenden instabilen Betriebszustandes während der Fahrt vorgesehen sind, der ein Kippmoment mit der Gefahr des seitlichen Umkippens der Maschine beinhaltet, wobei eine sensorische Erfassung der Bedienungsart eines Bedienelementes für die Maschine und eine Auswerteeinheit zur Erkennung einer Notsituation einer eine Bedieneinheit betätigenden Bedienperson vorgesehen sind und dass eine Kontrolleinheit vorgesehen ist, die nach Erkennung der Notsituation zur selbsttätigen Auslösung eines dem Kippmoment, das die Gefahr des Umkippens der Maschine beinhaltet, entgegenwirkenden Drehmomentes oder zu einer vorbeugenden Maschinenreaktion zur Vermeidung und/oder Reduzierung eines solchen Kippmomentes während der Maschinenfahrt mittels wenigstens einem Aktor ausgebildet ist, um einen stabilen Betriebszustand zu erzielen, wobei die Maschinenreaktion in der Ladeanlage und/ oder dem Fahrantrieb und/oder dem Fahrwerk vorgesehen ist, **dadurch gekennzeichnet, dass** unterschiedliche selbsttätige Lenkaktionen an wenigstens zwei Laufrädern und/oder Antriebsraupen vorgesehen sind, dass eine **seitliche** Neigungsverstellung der Ladeanlage vorgesehen ist und/oder dass eine **seitliche** Neigungsverstellung der Lastaufnahme der Ladeanlage vorgesehen ist und/oder dass eine dem drohenden Umkippen der Maschine entgegen wirkende **seitliche** Verschiebung von Maschinenkomponenten und/oder der von der Ladeanlage geladenen Last vorgesehen ist.

2. Maschine nach Anspruch 1, **dadurch gekennzeichnet, dass** eine einem drohenden seitlichen Umkippen der Maschine entgegen gerichtete seitliche Neigungsverstellung der Maschine vorgesehen ist.

3. Maschine nach einem der vorgenannten Ansprüche, **dadurch gekennzeichnet, dass** die Maschinenreaktion bei Fahrgeschwindigkeit ≥ 0 km/h vorgesehen ist.

4. Maschine nach einem der vorgenannten Ansprüche, **dadurch gekennzeichnet, dass** eine seitliche Neigungsverstellung zwischen dem Fahrwerk und einem Maschinenrahmen vorgesehen ist.

5. Maschine nach einem der vorgenannten Ansprüche, **dadurch gekennzeichnet, dass** eine selbsttätige Lenk- und/oder Beschleunigungs- und/oder Bremsaktion der Maschine vorgesehen ist.

6. Maschine nach einem der vorgenannten Ansprüche, **dadurch gekennzeichnet, dass** eine selbsttätige Beschleunigung und/oder Bremsaktion der Ladeanlage und/oder von Komponenten der Ladeanlage vorgesehen ist.

7. Maschine nach einem der vorgenannten Ansprüche, **dadurch gekennzeichnet, dass** als vorbeugende Maschinenreaktion eine Veränderung der zugelassenen Werte von Maschinenparametern vorgesehen ist, die seitens einer Bedienperson ansteuerbar sind.

8. Maschine nach einem der vorgenannten Ansprüche, **dadurch gekennzeichnet, dass** als Sensor ein Druckmesser für den Druck in wenigstens einem zur Auslenkung einer Pendelachse des Fahrwerks vorgesehenen Zylinder vorgesehen ist.

## Claims

1. Mobile machine with a loading system, a traction drive and a chassis, such as a wheeled loader, a telescopic loader or the like, wherein one or more sensors are provided for identifying an unstable operating state or an imminent unstable operating state while underway, said unstable operating state including a tipping moment with the risk of the machine tipping over laterally, wherein a sensor-based detection of the manner of operation of an operator control element for the machine and an evaluation unit for identifying an emergency situation of an operator actuating an operator control unit are provided, and in that a control unit is provided which is designed so as, after identification of the emergency situation, to use at least one actuator to automatically trigger a torque counteracting the tipping moment, which includes the risk of the machine tipping over, or for a preventative machine reaction for avoiding and/or reducing such a tipping moment during movement of the machine, in order to achieve a stable operating state, wherein the machine reaction is provided in the loading system and/or in the traction drive and/or in the chassis,
**characterized in that** different automatic steering actions at at least two running wheels and/or drive tracks are provided, **in that** a lateral inclination adjustment of the loading system is provided, and/or **in that** the lateral inclination adjustment of the load absorption of the loading system is provided, and/or **in that** a lateral displacement of machine components and/or of the load loaded by the loading system, said lateral displacement counteracting the imminent tipping over of the machine, is provided.

2. Machine according to Claim 1, **characterized in that** a lateral inclination adjustment of the machine directed counter to an imminent lateral tipping over of the machine is provided.

3. Machine according to either of the preceding claims, **characterized in that** the machine reaction is provided at a driving speed of ≥ 0 km/h.

4. Machine according to one of the preceding claims, **characterized in that** a lateral inclination adjustment is provided between the chassis and a machine frame.

5. Machine according to one of the preceding claims, **characterized in that** an automatic steering and/or acceleration and/or braking action of the machine is provided.

6. Machine according to one of the preceding claims, **characterized in that** an automatic acceleration and/or braking action of the loading system and/or of components of the loading system is provided.

7. Machine according to one of the preceding claims, **characterized in that** a change in the permitted values of machine parameters which are controllable by an operator is provided as the preventative machine reaction.

8. Machine according to one of the preceding claims, **characterized in that** a pressure gauge for the pressure in at least one cylinder provided for deflecting a full-floating axle of the chassis is provided as sensor.

## Revendications

1. Machine mobile, comprenant un système de chargement, un système d'entraînement et un mécanisme de roulement, telle qu'un chargeur à roues, un chargeur télescopique ou similaires, dans laquelle un ou plusieurs capteurs sont prévus pour identifier un état de fonctionnement instable ou un état de fonctionnement instable imminent pendant le déplacement qui comprend un moment de renversement associé au risque de basculement latéral de la machine, dans laquelle une détection par capteur du type d'actionnement d'un élément d'actionnement pour la machine et une unité d'évaluation pour identifier une situation d'urgence d'un opérateur actionnant une unité d'actionnement sont prévues, et une unité de contrôle est prévue qui, après identification de la situation d'urgence, est réalisée pour un déclenchement automatique d'un couple s'opposant au moment de renversement qui implique le risque de basculement de la machine ou pour une réaction préventive de la machine pour éviter et/ou réduire un tel moment de renversement pendant le déplacement de la machine au moyen d'au moins un actionneur afin d'obtenir un état de fonctionnement stable, dans laquelle la réaction de la machine est prévue dans le système de chargement et/ou le système d'entraînement et/ou le mécanisme de roulement,
**caractérisée en ce que** différentes actions de braquage automatiques sont prévues au niveau d'au moins deux roues de roulement et/ou de chenilles d'entraînement, **en ce qu'**un réglage d'inclinaison latéral du système de chargement est prévu, et/ou **en ce qu'**un réglage d'inclinaison latéral du dispositif de réception de charge du système de chargement est prévu, et/ou **en ce qu'**une translation latérale, s'opposant au basculement imminent de la machine, des composants de machine et/ou de la charge portée par le système de chargement est prévue.

2. Machine selon la revendication 1, **caractérisée en ce qu'**un réglage d'inclinaison latéral de la machine, dirigé à l'opposé d'un basculement latéral imminent de la machine, est prévu.

3. Machine selon l'une quelconque des revendications précédentes, **caractérisée en ce que** la réaction de la machine est prévue à une vitesse de déplacement ≥ 0 km/h.

4. Machine selon l'une quelconque des revendications précédentes, **caractérisée en ce qu'**un réglage d'inclinaison latéral est prévu entre le mécanisme de roulement et un bâti de la machine.

5. Machine selon l'une quelconque des revendications précédentes, **caractérisée en ce qu'**une action autonome de braquage et/ou d'accélération et/ou de freinage de la machine est prévue.

6. Machine selon l'une quelconque des revendications précédentes, **caractérisée en ce qu'**une accélération automatique et/ou une action de freinage du système de chargement et/ou de composants du système de chargement sont prévues.

7. Machine selon l'une quelconque des revendications précédentes, **caractérisée en ce qu'**un changement des valeurs admissibles de paramètres de machine qui peuvent être pilotées par un opérateur est prévu en tant que réaction préventive de la machine.

8. Machine selon l'une quelconque des revendications précédentes, **caractérisée en ce qu'**un manomètre pour la pression dans au moins un vérin prévu pour l'excursion d'un arbre oscillant du mécanisme de roulement est prévu en tant que capteur.
